# EUROPÄISCHE PATENTSCHRIFT

(11) **EP 0 470 283 B1**
(45) Veröffentlichungstag und Bekanntmachung des Hinweises auf die Patenterteilung: **19.02.1997**
(21) Anmeldenummer: 90115250.4
(22) Anmeldetag: 08.08.1990
(51) Int. Cl.: H04L 12/56, H04L 12/26, H04L 12/14

(54) **Verfahren und Schaltungsanordnung zum Ermitteln der Güte von über eine ATM-Vermittlungseinrichtung verlaufenden virtuellen Verbindungen**
Method and circuit arrangement for determining the quality of virtual circuits going through an ATM switching arrangement
Méthode et dispositif pour déterminer la qualité de circuits virtuels transitant par un dispositif de commutation ATM

(43) Veröffentlichungstag der Anmeldung: 12.02.1992
(73) Patentinhaber: SIEMENS AKTIENGESELLSCHAFT, 80333 München (DE)
(72) Erfinder: Schefts, Horst, Dipl.-Phys., D-8000 München 40 (DE)

(56) Entgegenhaltungen:
- EP-A- 0 310 173
- INTERNATIONAL SWITCHING SYMPOSIUM 1990 Mai 1990, Stockholm(SE) Seiten 21 - 26; T.KOINUMA et al.: "AN ATM SWITCHING SYSTEM BASED ON A DISTRIBUTED CONTROL ARCHITECTURE"

## Beschreibung

Die Erfindung betrifft ein Verfahren und eine Schaltungsanordnung zum Ermitteln der Güte der über Eingangsleitungen und Ausgangsleitungen einer ATM-Vermittlungseinrichtung verlaufenden virtuellen Verbindungen, wobei im Zuge dieser virtuellen Verbindungen jeweils Nachrichtenzellen nach einem asynchronen Transfermodus übertragen werden und dabei jede dieser Nachrichtenzellen über einen die jeweilige virtuelle Verbindung für die in Frage kommende Eingangsleitung bzw. Ausgangsleitung bezeichnenden Zellenkopf verfügt.

Bei Fernmeldevermittlungssystemen stellt sich generell das Problem, bestimmte Verbindungen in ihrer Güte zu überwachen, um Teilnehmern z.B. bei Reklamationen entsprechende Auskünfte erteilen zu können. Aber auch bei den Betreibern öffentlicher oder privater Vermittlungseinrichtungen besteht das Bedürfnis bzw. die Forderung, die Güte der Vermittlungseinrichtungen messen und überwachen zu können. Gütemessungen dieser Art fließen auch in die Wartungskonzepte ein, um beispielsweise absehbare Güteverschlechterungen über eine zulässige Toleranzgrenze hinaus zu vermeiden.

Aus EP-A-0 310 173 ist es bereits bekannt, in einem nach dem asynchronen Transfermodus arbeitenden Vermittlungsknoten eingangsseitig teilnehmerindividuell die Einhaltung vorgegebener Übertragungsbitraten zu überwachen. Hierzu sind pro Teilnehmer zwei Vorwärtszähler vorgesehen, um sowohl die Verbindungsdauer als auch die Anzahl der während der Verbindungsdauer übertragenen Zellen zu erfassen. Aus dem Verhältnis der Zählerstände wird ein Kriterium zur Erkennung einer Überlast abgeleitet. Darüber hinaus wird mit Hilfe dieser beiden Zähler eine Gebührenerfassung durchgeführt. Eine derartige eingangsseitige Gebührenerfassung bringt jedoch den Nachteil mit sich, daß bei dieser lediglich die dem Vermittlungsknoten zugeführten Zellen berücksichtigt werden. Nicht berücksichtigt werden jedoch diejenigen Zellen, die durch ein Fehlverhalten des Vermittlungsknotens, beispielsweise bei Auftreten von Hardware-Fehlern, verloren gehen und somit nicht ordnungsgemäß an den in Frage kommenden Empfangs-Teilnehmer weitergeleitet werden. Darüber hinaus können für die Kommunikation zwischen Teilnehmern höhere Benutzerprotokolle vorgesehen sein, durch welche bei einem nicht ordnungsgemäßen Empfang von Zellen seitens des Empfangs-Teilnehmers eine Übertragungswiederholung von Zellen angefordert wird. Auch wenn eine solche Wiederholung von Zellen auf Systemfehler innerhalb des Vermittlungsknotens zurückzuführen ist, werden die wiederholt übertragenen Zellen bei einer eingangsseitigen Gebührenerfassung mitberücksichtigt, das heißt eine Gebührenerfassung erfolgt hier zu Ungunsten der Teilnehmer.

Aus "International Switching Symposium 1990", Seiten 21 bis 26, T. Koinuma et al: "AN ATM SWITCHING SYSTEM BASED ON A DISTRIBUTED CONTROL ARCHITECTURE", ist es darüber hinaus bekannt, in einem Vermittlungssystem eingangsseitig verbindungsindividuell eine Überwachung auf die Einhaltung vorgegebener Übertragungsbitraten durchzuführen. Hierfür werden die für die jeweilige Verbindung eintreffenden Zellen gezählt und bei Überschreiten eines festgelegten Schwellwertes die eintreffenden Zellen markiert. Ausgangsseitig sind bei diesem Vermittlungssystem Warteschlangen für festgelegte Dienstklassen und Sub-Klassen vorgesehen. In diese Warteschlangen werden die innerhalb des Vermittlungssystems übertragenen Zellen entsprechend der für die jeweilige Verbindung geforderten Dienstklasse für eine Weiterleitung eingereiht. Vor einem Überlauf der Warteschlangen werden dabei zuvor eingangsseitig markierte Zellen vernichtet, d.h. von einer Einreihung in die jeweilige Warteschlange ausgeschlossen. Für die Steuerung der Weiterleitung der in die Warteschlangen aufgenommenen Zellen ist nun vorgesehen, daß die Anzahl der zugeführten und verworfenen Zellen erfaßt und nach Maßgabe der ermittelten Ergebnisse die Abarbeitung der einzelnen Warteschlangen gesteuert wird. Bei diesem bekannten Vermittlungssystem wird also lediglich eine dienstklassenindividuelle Zellenverlustrate anhand der durch das Teilnehmerverhalten bedingten, gezielten Vernichtung von Zellen ermittelt. Eine Bestimmung der Güte der einzelnen über eine ATM-Vermittlungseinrichtung verlaufenden virtuellen Verbindungen unter Berücksichtigung der Systemeigenschaften dieser Vermittlungseinrichtung ist dagegen bei der bekannten Vermittlungseinrichtung weder vorgesehen noch mit den offenbarten Einrichtungen realisierbar.

Es ist nun Aufgabe der vorliegenden Erfindung, einen Weg zu zeigen, wie bei einem Verfahren und einer Schaltungsanordnung der eingangs genannten Art die Güte von virtuellen Verbindungen anhand der im Zuge dieser virtuellen Verbindungen übertragenen Nachrichtenzellen ermittelt werden kann.

Gelöst wird diese Aufgabe bei einem Verfahren der eingangs genannten Art durch die im kennzeichnenden Teil des Patentanspruches 1 angegebenen Verfahrensmerkmale.

Die Erfindung bringt den Vorteil mit sich, daß die Güte der einzelnen virtuellen Verbindungen fortlaufend anhand der übertragenen Nachrichtenzellen ermittelt werden kann, ohne eine ATM-Vermittlungseinrichtung für diese Ermittlung wesentlich dynamisch zu belasten.

Vorteilhafte Ausgestaltungen des erfindungsgemäßen Verfahrens ergeben sich aus den Patentansprüchen 2 und 3. Die Ausgestaltung gemäß Patentanspruch 2 bringt den Vorteil einer einfachen Ermittlung der Güte einer ATM-Vermittlungseinrichtung mit sich. Der Vorteil der Ausgestaltung gemäß Patentanspruch 3 besteht dagegen darin, daß in die Gebührenermittlung nur die tatsächlich von einer ATM-Vermittlungseinrichtung an eine Teilnehmereinrichtung weitergeleitete Nachrichtenmenge eingeht. Damit bleiben beispielsweise aufgrund von Übertragungsstörungen innerhalb einer ATM-Vermittlungseinrichtung wiederholt übertragene Nachrichtenzellen bzw. fehlgeleitete Nachrichtenzellen für eine Gebührenermittlung außer Betracht.

Eine Schaltungsanordnung zur Durchführung des erfindungsgemäßen Verfahrens ergibt sich aus dem Patentanspruch 4. Der Vorteil dieser Schaltungsanordnung besteht dabei darin, daß die Registrierung der im Zuge von virtuellen Verbindungen übertragenen Nachrichtenzellen in peripheren Einrichtungen erfolgt, so daß die zentrale Steuereinrichtung einer ATM-Vermittlungseinrichtung weitgehend von der Ermittlung der Güte der virtuellen Verbindungen entlastet ist.

Zweckmäßige Ausgestaltungen dieser Schaltungsanordnung ergeben sich aus den Patentansprüchen 5 und 6. Der Vorteil dieser Ausgestaltungen besteht darin, daß die für die Registrierung von Nachrichtenzellen vorgesehenen Zähleinrichtungen lediglich eine relativ geringe Zählkapazität benötigen und somit der erforderliche Schaltungsaufwand gering gehalten werden kann.

Im folgenden wird nun die Erfindung anhand von Zeichnungen beispielsweise näher erläutert.
FIG 1 zeigt ein Blockschaltbild einer ATM-Vermittlungseinrichtung, bei der die Erfindung angewandt ist, und
FIG 2 zeigt einen möglichen Aufbau der in FIG 1 lediglich schematisch dargestellten Auswerteeinrichtungen.

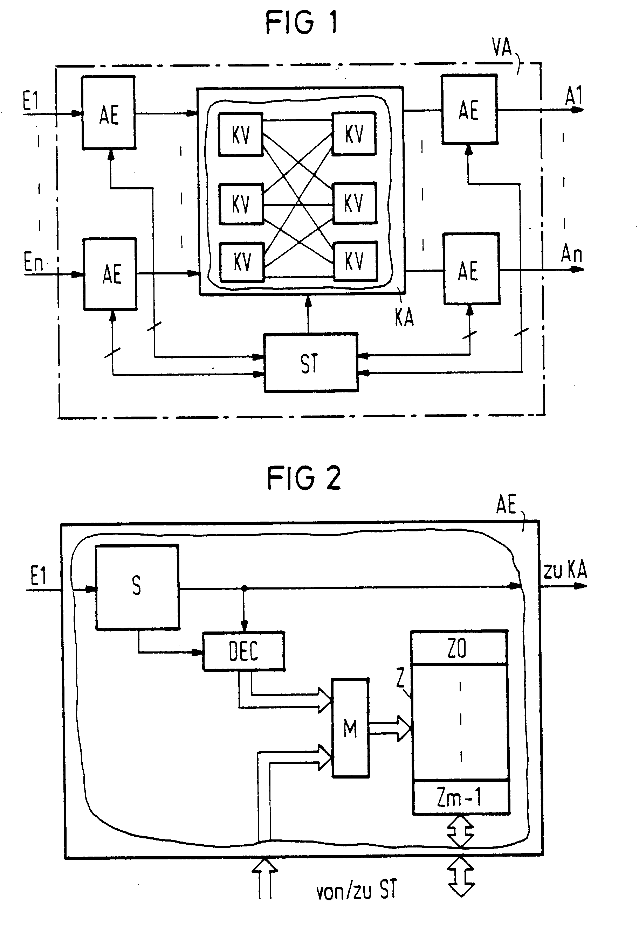

In FIG 1 ist eine ATM-Vermittlungseinrichtung VA schematisch dargestellt, an welche eine Mehrzahl von Eingangsleitungen E1 bis En sowie eine Mehrzahl von Ausgangsleitungen A1 bis An angeschlossen sind. Von diesen sind in FIG 1 lediglich die Eingangsleitungen E1 und En und die Ausgangsleitungen A1 und An angegeben. Auf den Eingangsleitungen und Ausgangsleitungen erfolgt jeweils eine Übertragung von Nachrichtenzellen im Zuge von virtuellen Verbindungen nach einem asynchronen Übertragungsverfahren ("asynchronous transfer mode"). Bei den Nachrichtenzellen möge es sich um Zellen fester Länge handeln, welche jeweils über einen Zellenkopf sowie einen Informationsteil verfügen. In dem Informationsteil erfolgt die Übertragung der eigentlichen Nachrichtensignale. Unter Nachrichtensignalen sollen dabei Daten-und Textsignale sowie Sprach- bzw. Bildsignale in digitaler Form verstanden werden. Ein Zellenkopf enthält dagegen u. a. eine sogenannte virtuelle Kanalnummer, durch die die jeweilige virtuelle Verbindung auf der in Frage kommenden Eingangsleitung bzw. Ausgangsleitung bezeichnet ist. In Übertragungspausen werden im übrigen den Nachrichtenzellen entsprechende Leerzellen übertragen.

Wie aus FIG 1 hervorgeht, ist jeder der Einangsleitungen und Ausgangsleitungen eine Auswerteeinrichtung AE zugeordnet, wobei sämtliche Auswerteeinrichtungen mit einer zentralen Steuereinrichtung ST in Verbindung stehen. Eine mit einer Eingangsleitung verbundene Auswerteeinrichtung nimmt die im Zuge von virtuellen Verbindungen übertragenen Nachrichtenzellen auf und ermittelt bei deren Weiterleitung an eine Koppelanordnung KA der ATM-Vermittlungseinrichtung verbindungsindividuell die Anzahl der im Zuge der jeweiligen virtuellen Verbindung übertragenen Nachrichtenzellen. In entsprechender Weise nimmt eine mit einer Ausgangsleitung verbundene Auswerteeinrichtung die ihr im Zuge von virtuellen Verbindungen zugeführten Nachrichtenzellen auf und ermittelt bei deren Weiterleitung an eine Teilnehmereinrichtung bzw. an eine nachfolgende ATM-Vermittlungseinrichtung verbindungsindividuell die Anzahl der im Zuge der jeweiligen virtuellen Verbindung übertragenen Nachrichtenzellen. Durch die Auswerteeinrichtungen AE wird somit für jede zwischen einer Eingangsleitung und einer Ausgangsleitung der ATM-Vermittlungseinrichtung verlaufende virtuelle Verbindung die Anzahl der in die ATM-Vermittlungseinrichtung aufgenommenen und der von dieser weitergeleiteten Nachrichtenzellen gesondert erfaßt. Nach dem Abbau der jeweiligen virtuellen Verbindung wird dann durch die zentrale Steuereinrichtung ST durch eine Differenzbildung der Anzahl der aufgenommenen und abgegebenen Nachrichtenzellen die Verlustrate als Maß für die Güte der jeweiligen virtuellen Verbindung ermittelt.

Für die Koppelanordnung KA, die von der zentralen Steuereinrichtung ST her steuerbar ist, ist in FIG 1 lediglich als Beispiel ein mehrstufiger Aufbau mit einer Mehrzahl von untereinander verbundenen Koppelvielfachen KV angegeben. Es können jedoch auch beliebige ein- oder mehrstufige Koppelanordnungen benutzt sein. Da der Aufbau und die Wirkungsweise derartiger Koppelanordnungen für die Weiterleitung von Nachrichtenzellen an in FIG 1 mit A1 bis An bezeichnete Ausgangsleitungen bekannt ist, wird im folgenden nicht näher darauf eingegangen.

In FIG 2 ist anhand der mit der Eingangsleitung E1 verbundenen Auswerteeinrichtung AE ein möglicher Aufbau der in FIG 1 angegebenen Auswerteeinrichtungen dargestellt. Dabei sind lediglich diejenigen Schaltungsteile angegeben, die für das Verständnis der vorliegenden Erfindung erforderlich sind.

Mit die Eingangsleitung E1 ist eine Schnittstelleneinrichtung S verbunden, welche ständig das Auftreten von zu der Koppelanordnung KA hin zu übertragenden Nachrichtenzellen überwacht. Das Erkennen eines Zellenkopfes führt dabei zur Abgabe eines Steuersignals, das der zentralen Steuereinrichtung ST sowie einem Decodierer DEC als Freigabesignal zugeführt ist. Außerdem wird diesem Decodierer der jeweilige Zellenkopf zugeleitet. Durch Decodieren der in einem solchen Zellenkopf enthaltenen virtuellen Kanalnummer werden dabei von dem Decodierer Adressensignale bereitgestellt, die über erste Eingänge eines Multiplexers M einer Zähleranordnung Z zugeführt sind. Diese Zähleranordnung weist für jede der auf der zugehörigen Eingangsleitung E1 möglichen virtuellen Verbindungen einen gesonderten Zähler auf. Die einzelnen Zähler sind dabei nach Maßgabe der in Nachrichtenzellen enthaltenen, von dem zuvor erwähnten Decodierer DEC decodierten virtuellen Kanalnummern individuell ansteuerbar. Können beispielsweise über die betreffende Eingangsleitung m mit "0" bis "m-1" bezeichnete virtuelle Verbindungen verlaufen, so sind diesen also, wie in FIG 2 angedeutet ist, mit Z0 bis Zm-1 bezeichnete Zähler zugeordnet.

Über zweite Eingänge des erwähnten Multiplexers M sind der Zähleranordnung Z zusätzlich von der in FIG 1 dargestellten zentralen Steuereinrichtung ST her Adressensignale zuführbar, um die einzelnen Zähler individuell anzusteuern. Darüber hinaus steht die zentrale Steuereinrichtung über bidirektionale Datenleitungen mit der Zähleranordnung Z in Verbindung.

Nachdem zuvor der Aufbau der in FIG 2 dargestellten Auswerteeinrichtung erläutert worden ist, wird nunmehr auf deren Wirkungsweise näher eingegangen.

Beim Aufbau von virtuellen Verbindungen werden von der Steuereinrichtung ST her die diesen virtuellen Verbindungen zugeordneten Zähler der in Frage kommenden Eingangsleitungen und Ausgangsleitungen durch Bereitstellen entsprechender Adressensignale individuell angesteuert. Dabei überführt die zentrale Steuereinrichtung den jeweiligen Zähler durch über die erwähnten Datenleitungen übertragene Signale in einen festgelegten Anfangszählerstand, der beispielsweise mit "0" festgelegt sein möge.

Treten nun auf der Eingangsleitung E1 nach dem Aufbau von virtuellen Verbindungen Nachrichtenzellen auf, so werden die diesen zugehörigen Zellenköpfe durch den Decodierer DEC decodiert. Mit den daraus resultierenden Adressensignalen werden die den virtuellen Verbindungen zugeordneten Zähler (Z0 bis Zm-1) individuell angesteuert. Bei einer solchen Ansteuerung wird dabei der momentane Zählerstand um eine Zähleinheit, beispielsweise um den Binärwert "1", verändert. Der daraus resultierende aktuelle momentane Zählerstand bleibt dann bis zur erneuten Ansteuerung des jeweiligen Zählers gespeichert. Die individuelle Ansteuerung der einzelnen Zähler wiederholt sich mit jedem Auftreten einer von dem jeweiligen Zähler zu erfassenden Nachrichtenzelle bis zum Abbau der jeweiligen virtuellen Verbindung.

Die gerade am Beispiel der mit der Eingangsleitung E1 verbundenen Auswerteeinrichtung AE erläuterten Steuerungsvorgänge laufen auch in den übrigen in FIG 1 dargestellten Auswerteeinrichtungen in entsprechender Weise ab. Damit werden für jede zwischen einer Eingangsleitung und einer Ausgangsleitung verlaufende virtuelle Verbindung zwei Zähler geführt. Der mit der in Frage kommenden Eingangsleitung verbundene Zähler erfaßt dabei die im Zuge der betreffenden virtuellen Verbindung in die ATM-Vermittlungseinrichtung aufgenommenen Nachrichtenzellen. Demgegenüber erfolgt durch den mit der in Frage kommenden Ausgangsleitung verbundene Zähler eine Erfassung der im Zuge der betreffenden virtuellen Verbindung von der ATM-Vermittlungseinrichtung weitergeleiteten Nachrichtenzellen.

Beim Abbau einer virtuellen Verbindung werden von der zentralen Steuereinrichtung ST her die dieser Verbindung zugeordneten Zähler durch Bereitstellen entsprechender Adressensignale angesteuert. Dabei werden die zu diesem Zeitpunkt in den beiden Zählern gespeicherten momentanen Zählerstände abgefragt. Anhand dieser momentanen Zählerstände wird dann beispielsweise, wie bereits oben erwähnt, durch eine Differenzbildung die Verlustrate als Maß der Güte der betreffenden virtuellen Verbindung ermittelt. Die Verlustraten der einzelnen virtuellen Verbindungen können dann, wie eingangs erwähnt, für Wartungszwecke, Auskünfte bezüglich der Qualität der einzelnen virtuellen Verbindungen sowie für die Gebührenermittlung herangezogen werden.

Darüber hinaus kann aus den Verlustraten der innerhalb eines festgelegten Zeitintervalls eingerichteten virtuellen Verbindungen durch eine Mittelwertbildung eine mittlere Verlustrate als Maß der Güte für die gesamte ATM-Vermittlungseinrichtung gebildet werden.

Bezüglich der zuvor erläuterten Steuerungsvorgänge sei noch darauf hingewiesen, daß mit jedem Auftreten einer Nachrichtenzelle bzw. Leerzelle zwei gesonderte Bearbeitungsintervalle festgelegt sind. In einem ersten erfolgt bei Auftreten einer Nachrichtenzelle die Ansteuerung des in Frage kommenden Zählers. Das zweite Bearbeitungsintervall steht dagegen der zentralen Steuereinrichtung ST für eine Einstellung eines Zählers bei einem Verbindungsaufbau bzw. für eine Übernahme eines momentanen Zählerstandes bei einem Verbindungsabbau zur Verfügung. Im übrigen können die einzelnen Zähler für eine relativ geringe Zählkapazität ausgelegt werden, wenn die momentanen Zählerstände dieser Zähler von der zentralen Steuereinrichtung her in festgelegten Zeitintervallen abgefragt werden. Beispielsweise könnten diese Zeitintervalle im Minutenbereich liegen. Darüber hinaus können die Zähler auch als periodisch umlaufende Zähler ausgebildet sein, welche mit jedem Erreichen eines festgelegten Zählerstandes der zentralen Steuereinrichtung ein Meldesignal (Überlaufsignal) zuführen. Die Anzahl der für die einzelnen Zähler im Laufe der Zeit abgegebenen Meldsignale könnten dann in der zentralen Steuereinrichtung zählerindividuell aufsummiert werden und beim Abbau der virtuellen Verbindungen bei der Auswertung der momentanen Zählerstände berücksichtigt werden.

Abschließend sei noch darauf hingewiesen, daß die zuvor erläuterte Erfindung nicht nur im engeren Sinne in ATM-Vermittlungsanlagen, sondern allgemein in Einrichtungen eines ATM-Netzes, z. B. in Konzentratoren, für die Ermittlung der Güte von virtuellen Verbindungen benutzt werden kann.

## Patentansprüche

1. Verfahren zur Ermittlung der Güte der über Eingangsleitungen (E1,...,En) und Ausgangsleitungen (A1,...,An) einer ATM-Vermittlungseinrichtung (VA) verlaufenden virtuellen Verbindungen, wobei im Zuge dieser virtuellen Verbindungen jeweils Nachrichtenzellen nach einem asynchronen Transfermodus übertragen werden und dabei jede dieser Nachrichtenzellen über einen Zellenkopf verfügt, durch den die jeweilige virtuelle Verbindung für die in Frage kommende Eingangsleitung bzw. Ausgangsleitung bezeichnet ist,
**dadurch gekennzeichnet**,
daß in der ATM-Vermittlungseinrichtung (VA) anhand der Zellenköpfe der über die Eingangsleitungen (E1,...,En) aufgenommenen bzw. der an die Ausgangsleitungen (A1,...,An) abgegebenen Nachrichtenzellen verbindungsindividuell die Anzahl der aufgenommenen und abgegebenen Nachrichtenzellen gesondert erfaßt wird und daß auf den Abbau der jeweiligen virtuellen Verbindung hin aus der zuvor gesondert erfaßten Anzahl von aufgenommenen und abgegebenen Nachrichtenzellen die Verlustrate der Nachrichtenzellen als Maß für die Güte der jeweiligen virtuellen Verbindung ermittelt wird.

2. Verfahren nach Anspruch 1,
**dadurch gekennzeichnet**,
daß aus den ermittelten Verlustraten der innerhalb eines festgelegten Zeitintervalls eingerichteten virtuellen Verbindungen eine mittlere Verlustrate als Gütemaß für die ATM-Vermittlungseinrichtung (VA) gebildet wird.

3. Verfahren nach Anspruch 1,
**dadurch gekennzeichnet**,
daß die für die jeweilige virtuelle Verbindung ermittelte Verlustrate in die Gebührenermittlung einbezogen wird.

4. Schaltungsanordnung zur Ermittlung der Güte der über Eingangsleitungen (E1,...,En) und Ausgangsleitungen (A1,...,An) einer ATM-Vermittlungseinrichtung (VA) verlaufenden virtuellen Verbindungen, wobei im Zuge dieser virtuellen Verbindungen jeweils Nachrichtenzellen nach einem asynchronen Transfermodus übertragen werden und dabei jede dieser Nachrichtenzellen über einen Zellenkopf verfügt, durch den die jeweilige virtuelle Verbindung für die in Frage kommende Eingangsleitung bzw. Ausgangsleitung bezeichnet ist, zur Durchführung des Verfahrens nach Anspruch 1,
**dadurch gekennzeichnet**,
daß den Eingangsleitungen (E1,...,En) und den Ausgangsleitungen (A1,...,An) jeweils eine der Anzahl der über diese verlaufenden virtuellen Verbindungen entsprechende Anzahl von Zähleinrichtungen (Z0,...,Zm-1) zugeordnet ist,
daß die Zähleinrichtungen jeweils im Zuge des Aufbaus der zugeordneten virtuellen Verbindung von einer zentralen Steuereinrichtung (ST) her in einen festgelegten Anfangs zählerstand überführbar sind,
daß die einzelnen Zähleinrichtungen bei Auftreten von Nachrichtenzellen auf der zugeordneten Eingangsleitung bzw. Ausgangsleitung nach Maßgabe des in diesen Nachrichtenzellen jeweils enthaltenen Zellenkopfes individuell ansteuerbar sind, daß mit jeder Ansteuerung einer Zähleinrichtung deren momentaner Zählerstand, ausgehend von dem festgelegten Anfangszählerstand, um eine Zähleinheit veränderbar ist
und daß die momentanen Zählerstände der einer virtuellen Verbindung zugeordneten Zähleinrichtungen zumindest bei deren Abbau von der zentralen Steuereinrichtung her für die Ermittlung der Verlustrate abfragbar sind.

5. Schaltungsanordnung nach Anspruch 4,
**dadurch gekennzeichnet**,
daß die momentanen Zählerstände der Zähleinrichtungen (Z0,...,Zm-1) zusätzlich in festgelegten Zeitintervallen abfragbar sind.

6. Schaltungsanordnung nach Anspruch 4,
**dadurch gekennzeichnet**,
daß die Zähleinrichtungen (Z0,...,Zm-1) als periodisch umlaufende Zähleinrichtungen ausgebildet sind
und daß mit jedem Erreichen eines festgelegten Zählerstandes der zentralen Steuereinrichtung (ST) vor einem Abbau der jeweiligen virtuellen Verbindung ein Meldesignal gesondert bereitgestellt ist.

## Claims

1. Method for determining the quality of the virtual connections over input lines (E1,...,En) and output lines (A1,...,An) of an ATM switching arrangement (VA), message cells being transmitted in each case in the course of these virtual connections by an asynchronous transfer mode and in this case each of these message cells having a cell header, by which the respective virtual connection is identified for the relevant input line and output line, characterized in that, in the ATM switching arrangement (VA), the number of received and delivered message cells is separately registered connection-individually on the basis of the cell headers of the message cells received via the input lines (E1,...,En) and the message cells delivered to the output lines (A1,...,An) and that, in response to the clear-down of the respective virtual connection, the loss rate of the message cells is determined from the number of received and delivered message cells separately registered beforehand as a measure of the quality of the respective virtual connection.

2. Method according to Claim 1, characterized in that an average loss rate is formed from the determined loss rates of the virtual connections set up within a specified time interval as a measure of the quality of the ATM switching arrangement (VA).

3. Method according to Claim 1, characterized in that the loss rate determined for the respective virtual connection is included in the calculation of charges.

4. Circuit arrangement for determining the quality of the virtual connections over input lines (E1,...,En) and output lines (A1,...,An) of an ATM switching arrangement (VA), message cells being transmitted in each case in the course of these virtual connections by an asynchronous transfer mode and in this case each of these message cells having a cell header, by which the respective virtual connection is identified for the relevant input line and output line, for carrying out the method according to Claim 1, characterized in that the input lines (E1,...,En) and the output lines (A1,...,An) are respectively assigned a number of counting means (Z0,...,Zm-1) corresponding to the number of virtual connections over them, in that the counting means can be set to a specified initial counter reading by a central control means (ST) in each case in the course of setting up the assigned virtual connection, in that, when message cells occur on the assigned input line or output line, the individual counting means can be individually activated on the basis of the cell header respectively contained in these message cells, in that, with each activation of a counting means, their momentary counter reading can be changed by one counting unit, starting from the specified initial counter reading, and in that the momentary counter readings of the counting means assigned to a virtual connection can be enquired, at least when the said connection is being cleared down, by the central control device for determining the loss rate.

5. Circuit arrangement according to Claim 4, characterized in that the momentary counter readings of the counting means (Z0,...Zm-1) can additionally be enquired at specified time intervals.

6. Circuit arrangement according to Claim 4, characterized in that the counting means (Z0,...,Zm-1) are designed as periodically cycling counting means and in that, every time a specified counter reading of the central control means (ST) is reached before the respective virtual connection is cleared down, a status signal is separately made available.

## Revendications

1. Procédé pour déterminer la qualité des communications virtuelles passant par l'intermédiaire de lignes d'arrivée (E1 à En) et de lignes de départ (A1 à An) d'un dispositif de commutation ATM (VA), des cellules d'informations étant transmises au cours de ces communications virtuelles selon un mode de transfert asynchrone et chacune de ces cellules d'informations disposant d'un en-tête désignant la communication virtuelle respective pour la ligne d'arrivée ou de départ considérée,
caractérisé par le fait que
dans le dispositif de commutation ATM (VA), on détecte séparément pour chaque communication, à l'aide des en-têtes des cellules d'informations reçues par l'intermédiaire des lignes d'arrivée (E1 à En) et fournies aux lignes de départ (A1 à An), le nombre des cellules d'informations reçues et le nombre des cellules d'informations envoyées et, à la suite de la suppression de la communication virtuelle considérée, on détermine, à partir des nombres détectés auparavant séparément des cellules d'informations reçues et envoyées, le taux de pertes des cellules d'informations comme mesure pour la qualité de la communication virtuelle considérée.

2. Procédé selon la revendication 1,
caractérisé par le fait que
à partir des taux de pertes déterminés des communications virtuelles établies pendant un intervalle de temps fixé, on calcule un taux de pertes moyen comme mesure de qualité pour le dispositif de commutation ATM (VA).

3. Procédé selon la revendication 1,
caractérisé par le fait que
on fait intervenir dans la taxation le taux de pertes déterminé pour la communication virtuelle considérée.

4. Montage pour déterminer la qualité des communications virtuelles passant par l'intermédiaire de lignes d'arrivée (E1 à En) et de lignes de départ (A1 à An) d'un dispositif de commutation ATM (VA), des cellules d'informations étant transmises au cours de ces communications virtuelles selon un mode de transfert asynchrone et chacune de ces cellules d'informations disposant d'un en-tête désignant la communication virtuelle respective pour la ligne d'arrivée ou de départ considérée, en vue de la mise en oeuvre du procédé selon la revendication 1,
caractérisé par le fait que
aux lignes d'arrivée (E1 à En) et aux lignes de départ (A1 à An) est associé un nombre de compteurs (Z0 à Zm-1), correspondant au nombre des communications virtuelles passant par l'intermédiaire de ces lignes,
au cours de l'établissement de la communication virtuelle considérée, un dispositif central de commande (ST) peut mettre les compteurs dans un état de comptage initial fixé,
les différents compteurs peuvent être commandés individuellement, lors de l'apparition de cellules d'informations sur la ligne d'arrivée ou de départ associée, en fonction de l'en-tête de cellule contenu dans ces cellules d'informations,
à chaque commande d'un compteur, son état de comptage momentané, à partir de l'état de comptage initial fixé, peut être modifié d'une unité de comptage,
et les états de comptage momentanés des compteurs associés à une communication virtuelle peuvent être interrogés par le dispositif central de commande, au moins à la suppression de la communication virtuelle, en vue de la détermination du taux de pertes.

5. Dispositif selon la revendication 4,
caractérisé par le fait que
les états de comptage momentanés des compteurs (Z0 à Zm-1) peuvent être interrogés en plus à des intervalles de temps fixés.

6. Dispositif selon la revendication 4,
caractérisé par le fait que
les compteurs (Z0 à Zm-1) sont conçus comme des compteurs tournant périodiquement
et, à chaque fois qu'ils atteignent un état de comptage fixé, un signal d'avis est envoyé séparément au dispositif central de commande (ST) avant une suppression de la communication virtuelle considérée.
